(19) Europäisches Patentamt / European Patent Office / Office européen des brevets

(11) **EP 3 348 523 A1**

(12) **EUROPEAN PATENT APPLICATION**

(43) Date of publication:
**18.07.2018 Bulletin 2018/29**

(51) Int Cl.:
***C03B 7/10*** *(2006.01)*

(21) Application number: **18150445.7**

(22) Date of filing: **05.01.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD TN**<br><br>(30) Priority: **11.01.2017 IT 201700002460**<br><br>(71) Applicant: **Bottero S.p.A.**<br>**12100 Cuneo (IT)** | (72) Inventors:<br>• VIADA, Bruno<br>  **12100 CUNEO (IT)**<br>• NITTARDI, Bruno<br>  **12011 BORGO SAN DALMAZZO (IT)**<br><br>(74) Representative: **Lovino, Paolo et al**<br>**Studio Torta S.p.A.**<br>**Via Viotti, 9**<br>**10121 Torino (IT)** |

(54) **CUTTING ASSEMBLY AND METHOD FOR FORMING GLASS GOBS**

(57)   A cutting assembly (1) is provided with a supporting frame (5), with two shear cutting members (6) revolving with respect to the supporting frame (5) about respective hinge axes (8), parallel to each other, and with a movement device (19) for rotating the shear cutting members (6) with a reciprocating rotary motion, with equal angles and in opposite directions; the shear cutting members rotate between a retracted rest position and an advanced cutting position to form a glass gob (2) from at least one thread of molten glass (3); the movement device (19) is provided with a connecting rod and crank transmission (22), a rotary motor (20) with a rotor, which drives such transmission, and with a control unit (21), which controls the rotary motor and is configured so as to rotate the rotor in opposite directions between two stroke-end angular positions, corresponding to the retracted rest position of the shear cutting members (6).

FIG. 1

Printed by Jouve, 75001 PARIS (FR)

## Description

PRIORITY CLAIM

This application claims priority from Italian Patent Application No. 102017000002460 filed on January 11, 2017, the disclosure of which is incorporated by reference.

The present invention relates to a cutting assembly for forming glass gobs from a thread of molten glass.

Forming machines, called I.S. machines, are known in the sector of forming hollow glass articles. In such machines, a thread of molten glass is formed and then fed so as to pour in a vertical direction. During casting, the thread of glass is cut transversely by a cutting assembly so as to form a succession of gobs, which are then fed towards respective molds for forming hollow glass articles.

Some of the known cutting assemblies are of the scissor type, in other words they comprise two shear cutting members, which are movable with reciprocating movement, in opposite directions to each other, along a horizontal cutting direction between two stroke-end positions. Such stroke-end positions represent a retracted rest position, wherein an empty space is provided between the shear cutting members to allow the thread of molten glass to advance, and an advanced cutting position, wherein the thread is cut so as to break off a glass gob downstream of the cutting assembly. At the same time, in the retracted rest position, the shear cutting members are cooled and/or treated superficially to prepare for the subsequent contact with the thread of glass.

In particular, "parallel scissor" type cutting assemblies are known, wherein the shear cutting members are provided with reciprocating rectilinear movement; and "curved scissor" type cutting assemblies, wherein the shear cutting members are provided with reciprocating rotating movement about respective hinge axes.

In this latter type of solution, the shear cutting members are generally driven by a connecting rod and crank transmission, which is driven, in turn, by an electric rotary motor by means of a speed reducer. Such motor is controlled so as to rotate continuously to rotate the connecting rod. For half of each turn of the connecting rod, the crank moves the shear cutting members to perform a closed angular stroke (from the retracted rest position to the advanced cutting position). In the other half of each turn of the connecting rod, the crank moves the shear cutting members to perform an open angular stroke (from the advanced cutting position to the retracted rest position).

Generally, the cutting assembly operation must be adapted to different productions, for example with different molten glass thread diameters by regulating the retracted rest position. From this point of view, the known solutions are unsatisfactory as such position can only be varied by mechanically regulating the transmissions driven by the motor after stopping operation of the cutting assembly. Whereas, it would be opportune to perform such regulation rapidly, based on the user's settings.

At the same time, the need is felt to have a flexible system as regards the user's settings of the cutting conditions, in particular of the cutting speed.

It is the object of the present invention to produce a cutting assembly for forming glass gobs, which allows the needs illustrated above to be executed simply and cheaply, and which is preferably both reliable, compact and simple in terms of construction.

A cutting assembly for forming glass gobs is produced according to the present invention, as defined in claim 1.

Furthermore, a cutting method for forming glass gobs is provided according to the present invention, as defined in claim 10.

The invention will now be described with reference to the appended drawings, illustrating a non-limiting embodiment, wherein:

- Figure 1 is a perspective top view of a preferred embodiment of the cutting assembly for forming glass gobs, according to the present invention;
- Figures from 2 to 4 are perspective bottom views of the cutting assembly in Figure 1, shown in different operating positions;
- Figure 5 illustrates a movement profile used for the working of the cutting assembly; and
- Figure 6 is a block diagram relating to the working of the cutting assembly.

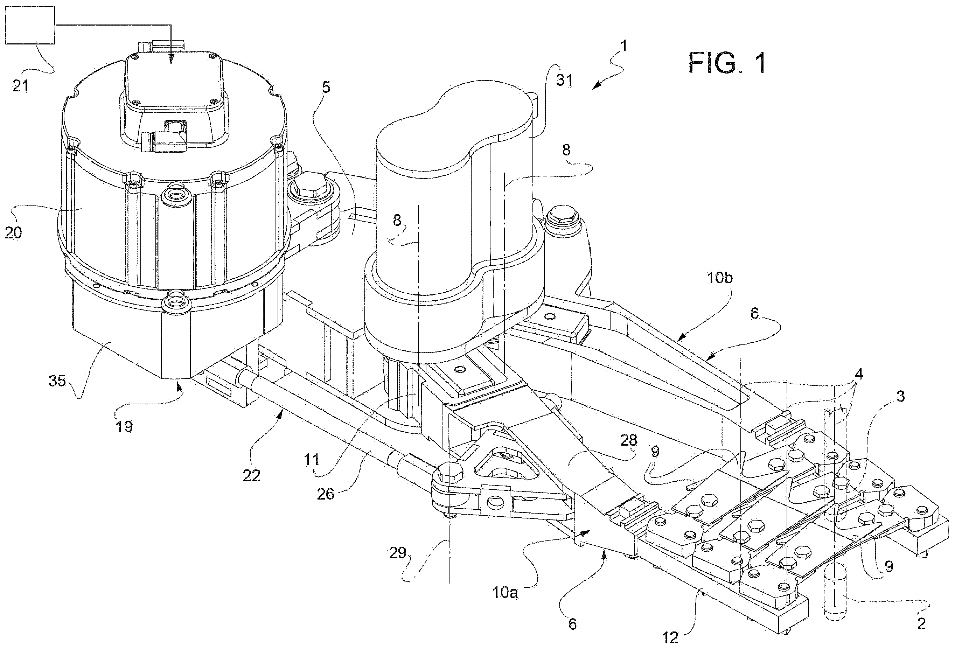

In Figure 1, reference number 1 indicates a cutting assembly for forming glass gobs 2 (only one of which is illustrated, in a simplified manner, with a dotted line) starting from at least one thread of molten glass 3, which is first formed by extrusion, fed towards the assembly 1 and then poured along a vertical direction 4 through the assembly 1. In particular, the assembly 1 constitutes part of a machine for forming hollow glass, of the type commonly indicated as an I.S. machine, provided with a plurality of forming sections and a system for distributing and conveying the glass gobs 2 towards respective molds arranged in such forming sections. In the particular example taken into consideration, the assembly 1 is configured so as to perform cutting operations on three threads 3 simultaneously.

The cutting assembly 1 is of the type commonly defined as "curved scissors" and comprises a supporting frame 5 and a pair of shear cutting members 6, which rotate with respect to the frame 5 about respective hinge axes 8, parallel to each other and to the direction 4, between two positions. Such positions are a retracted rest position, wherein an empty space is provided between the shear cutting members 6 to allow the threads 3 to pour freely, and an advanced cutting position, wherein the threads 3 are cut so as to break off respective glass gobs 2.

Each shear cutting member 6 comprises at least one blade 9 and an arm having two opposite terminal portions 11 and 12, of which portion 11 is hinged to the frame 5 about the axis 8, while portion 12 supports the blade 9. In the particular illustrated example, each shear cutting member 6 comprises three blades 9, arranged along portion 12 in positions, which are radially spaced apart from one another, equal to the distance between the threads 3.

The arms of the shear cutting members 6 are indicated with reference numbers 10a and 10b, respectively, and if seen in a plan, top view, in other words parallel to the axes 8, they are symmetrical with respect to a vertical plane of symmetry. In particular, considering such plan view from above, the arms 10a and 10b are not rectilinear, but they have respective concavities facing one another.

The blades 9 of each member 6 protrude from the portion 12 towards the other member 6 along directions, which are substantially parallel to one another, and they are not orthogonal to the portion 12, but they are inclined towards the axes 8 so as to form acute angles with the portion 12.

The cutting assembly 1 comprises a movement device 19, which, in turn, comprises: a rotary motor 20, defined in particular by an electric motor, advantageously a torque motor; a control unit 21 (illustrated schematically), which controls the motor 20; and a transmission 22, advantageously of the type with a connecting rod and crank.

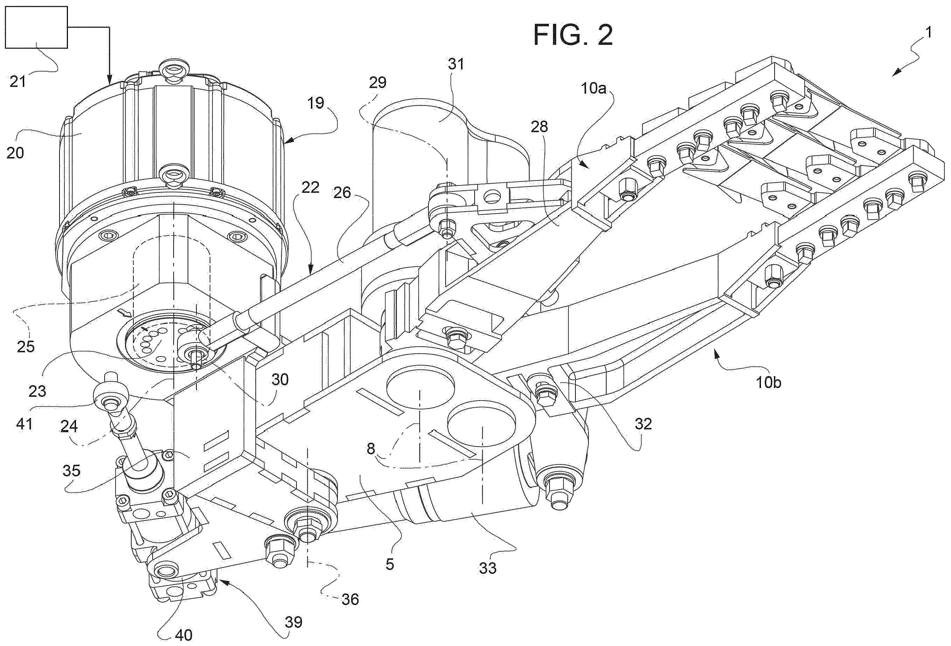

With reference to Figure 2, the transmission 22 comprises a crank 23 revolving about an axis 24 parallel to the axes 8 under the action of the motor 20. The motor 20 comprises a rotor or a shaft 25 (illustrated with a dotted line), having a rotation axis preferably coinciding with the axis 24. Even more preferably, the shaft 25 is fixed directly or indirectly to the crank 23, not described in detail, without including any mechanical transmission to vary the speed ratio between the shaft 25 and the crank 23.

The transmission 22 also comprises a connecting rod 26, whose opposite ends are hinged to an intermediate portion 28 of the arm 10a and to an eccentric portion of the crank 23 respectively, about articulation axes 29 and 30, which are parallel to the axes 8 and 24. In particular, the crank 23 is defined by a disc, which extends on a plane orthogonal to the axis 24 and is constrained to the connecting rod 26 by means of a pin protruding from such disc downwards along the axis 30. However, other configurations can be included for the crank 23, for example a rod or fork configuration.

The device 19 also comprises a transmission 31, of the type known and not described in detail, which is supported by the frame 5, it transmits the rotation movement from the arm 10a to the arm 10b and is configured so as to obtain a movement of the shear cutting members 6 with equal angles, but in opposite rotating directions. In this way, it is sufficient to drive only the arm 10a to obtain the synchronized rotation of the two shear cutting members 6.

On the opposite lateral side, the arm 10b comprises an intermediate portion 32, which is coupled to the frame 5 by means of a thrust device 33, defined for example by a pneumatic cylinder, in other words an air spring, to recover any play of the transmission 31.

The position of the axis 24 with respect to the frame 5 is varying, to record the advanced cutting position of the arm 10a and/or to further distance the shear cutting members 6 from the area in which the threads 3 fall. In particular, the motor 20 and the crank 23 are supported by a structure 35, for example a bracket, which is hinged to the frame 5 about an axis 36, parallel and eccentric with respect to the axis 24. Specifically, the structure 35 is fixed to housing of the motor 20 and supports the rotor 25 by means of a bearing (not illustrated). The frame 5 preferably comprises a stop shoulder, against which the structure 35 rests, defining the normal position of use of the motor 20. At the same time, an actuator 39, defined, for example by a pneumatic linear actuator, is driven to push and keep the structure 35 against such stop shoulder. In particular, the actuator 39 extends along a direction tangential to the axis 36 and comprises two connection portions 40 and 41, hinged to the frame 5 and to the structure 35 respectively about articulation axes parallel to the axes 24 and 36. The actuator 39 can be controlled, if necessary, to distance the structure 35 from the stop shoulder and consequently open the shear cutting members 6, with an extra-stroke with respect to the retracted rest position.

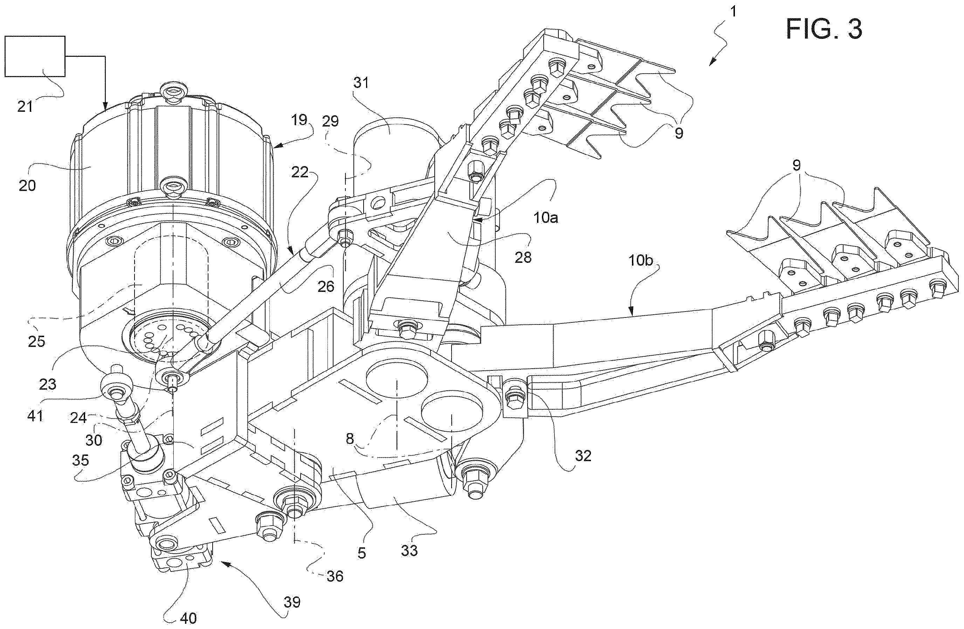

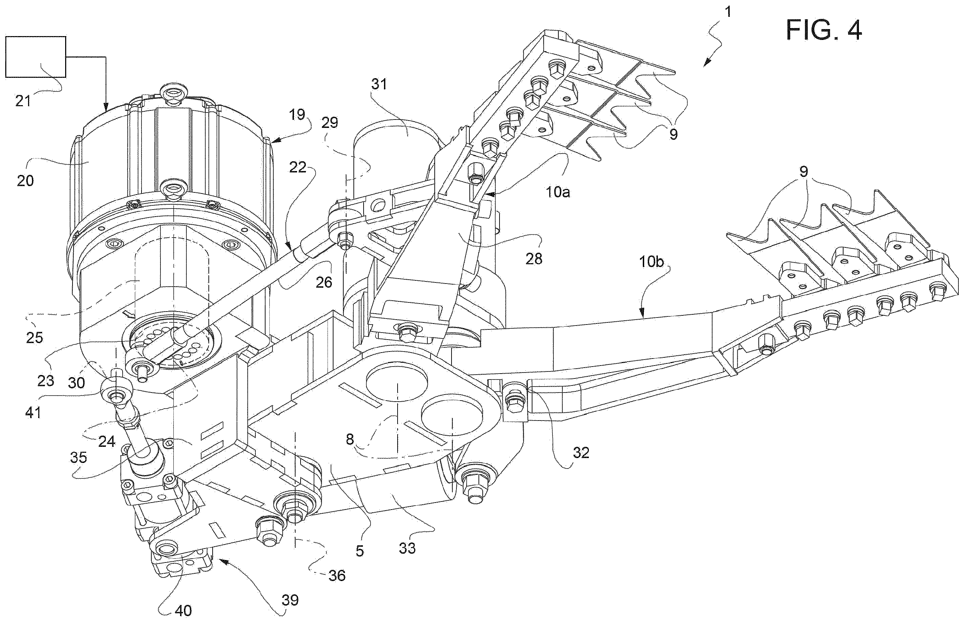

According to one aspect of the present invention, the unit 21 is configured so as to control the motor 20 and obtain a rotation of the shaft 25 and, consequently, of the crank 23 with reciprocating movement between two stroke-end angular positions. The angular stroke of the crank 23 between these two positions is preferably an angle smaller than 360°. In other words, the motor 20 is controlled so as to stop the shaft 25 at the two stroke-end angular positions and to start again in the opposite direction. A waiting time may possibly be included between the stop and the restarting of the motor 20 at the two stroke-end angular positions. Advantageously, such stroke-end angular positions are set so as to correspond to the same retracted rest position as the arm 10a, as shown in Figures 3 and 4.

As can be seen in Figure 2, during the rotation between the two stroke-end angular positions, the shaft 25 and the crank 23 reach an intermediate angular position, corresponding to a configuration, wherein the axes 24, 30 and 29 are aligned along a rectilinear direction to reach the maximum extension of the transmission 22. In other words, such intermediate angular position corresponds to a dead center position of the transmission 22, and the arm 10a is positioned in the advanced cutting position.

Thanks to this method of operation, it is possible to choose, within a certain margin of freedom, the two stroke-end angular positions of the crank 23 so as to define the stroke of the arm 10a (opening towards the retracted rest position and closing towards the advanced cutting position) and consequently the stroke of the blades 9, in particular to adapt the working of the assembly 1 to the production type (for example to the diameter of the threads 3) in the design phase. For example, a series of different settings made during the design, are memorized in the unit 21 and can be chosen by I.S. machine operators based on the production type.

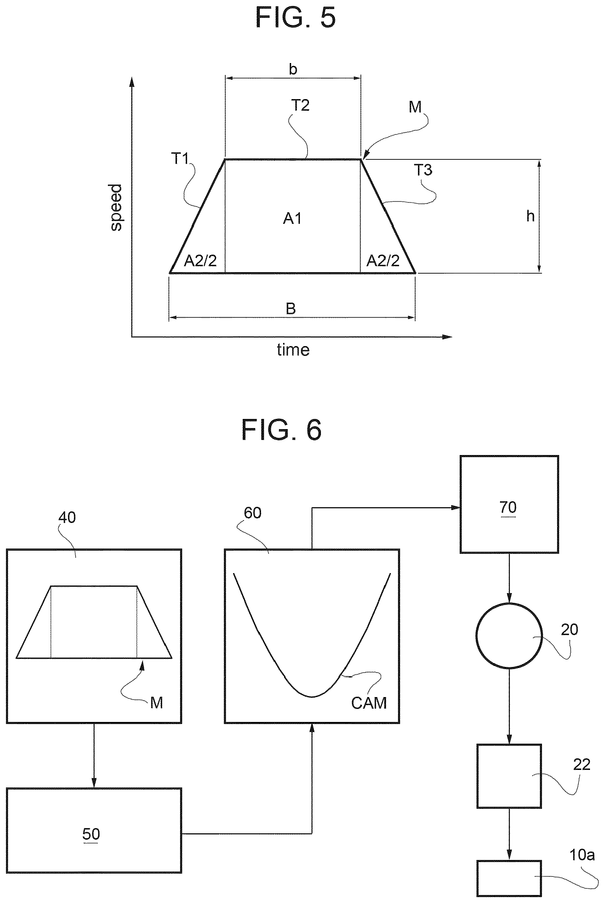

Advantageously, the operators can also set a desired movement profile and, in particular, a desired cutting speed: the unit 21 controls the motor 20 so as to obtain an effective movement profile corresponding to the profile set. According to the preferred embodiment illustrated in Figure 5, the user sets one or more parameters of a speed profile M of a trapezoidal type.

In particular, the profile M defines a virtual movement profile, or "master" movement profile, and not the effective movement profile ("slave" movement profile) with which the rotor 25 is made to rotate.

In fact, as explained above, the successive cutting cycles are carried out by rotations of the motor 20 in opposite directions. In other words, the shaft 25 rotates with a one-way movement (clockwise for example) to implement a cutting cycle and then a return movement (anti-clockwise) to implement the next cutting cycle. As a result of the geometric and structural characteristics of the assembly 1, with the same rotation speed as the rotor 25, the rotation speed of the members 6 is different between the two successive cutting cycles. Therefore, in order to harmonize the movements of the members 6 and, consequently, the cutting conditions between the various cycles, the speed profiles of the rotor 25 during the one-way movement (clockwise) and during the return movement (anti-clockwise) are different. The profile M set by the user is a virtual speed/time profile, which corresponds to the profile that would be set theoretically on the rotor 25 in both rotation directions in the absence of asymmetries or distortions, caused by the geometric and structural characteristics of the transmission 22 and the arm 10a. At the same time, the unit 22 is configured so as to compensate such asymmetries or distortions, to harmonize the cutting speeds and, consequently, the weight of the various gobs 2 between the cutting cycles with a clockwise movement and an anti-clockwise movement.

More specifically, a so-called "electronic cam" is memorized in the unit 21, for example in the form of a chart or in the form of a table, to transform the profile M into the "slave" movement profile, which must be obtained effectively by controlling the motor 20. By way of example, such electronic cam is indicated as the CAM curve in Figure 6. In particular, the electronic cam is defined by at least 64 opportunely interpolated points. The electronic cam is established during the design, for example based on simulations, and depends solely on the geometric and structural characteristics of the assembly 1.

In particular, the positions of the "master" movement profile and the positions of the "slave" movement profile are represented along the axis of the abscissae and the ordinates of the CAM curve, respectively. Therefore, as indicated schematically in Figure 6, after a parameter relating to the profile M (speed/time) (block 40) has been set by the user, the unit 21 determines the positions of the "master" movement profile, based on the time (block 50) and uses such positions as input data in the CAM curve (block 60), so as to determine the positions of the "slave" movement profile based on the time. The results of this processing are used to determine the command signals to be supplied to the motor 20 (block 70) and effectively obtain the "slave" movement profile on the rotor 25.

With reference to Figure 5, the profile M is composed of an initial rectilinear section T1, in acceleration (starting from one of the two stroke-end angular positions of the rotor 25), an intermediate section T2 at a constant speed, in which the cutting of the thread 3 is carried out, and a final rectilinear section T3, in deceleration (until the other of the two stroke-end angular positions of the rotor 25).

A1 is the rotation stroke covered during the section T2, it is equal to the rectangular area subtended by the section T2 and it is indicative of the space covered by the blades 9; A1 is preferably a fixed value, established during the design, based on the diameter of an orifice (not shown), which forms the diameter of the thread 3 by extrusion.

A2/2 is the rotation stroke covered in each of the sections T1 and T3, it is equal to the triangular area subtended by each of the sections T1 and T3 and it is indicative of the acceleration and deceleration space of the blades 9 at the retracted open position.

A (=A1+A2) is the rotation stroke between the stroke-end angular positions of the rotor 25 and it is equal to the total area of the trapezium; as stated above, it is preferably a pre-set value determined during the design phase based on the production type.

B is the time needed to execute the stroke A and it is equal to the larger base of the trapezium.

b is the time of the section T2 needed to cover the space A1 (i.e. to make the cut) and it is equal to the smaller base of the trapezium.

Finally, h is the rotation speed in section T2 and it is indicative of the speed of the blades 9 during the cutting.

As A1 and A are fixed values, memorized in the unit 21, the user has the possibility to set only one parameter, in other words the time B or the speed h, from which all of the other parameters of the profile M are calculated. For example, setting the speed h gives you:

$$b = A1/h$$

$$B = (2*A - A1)/h$$

Or, setting the time B gives you:

$$b = A1*B/(2A-A1)$$

$$h = 2A/(B+b)$$

By setting the parameter B or h, the user indirectly establishes the speed of the blades 9 during the cutting.

According to variations, which are not shown, sections T1, T3, assumed as linear in the present embodiment, can be replaced by "S"-shaped ramps to reduce the stress on the mechanical parts; and/or the acceleration ramp could be different from the deceleration ramp. Moreover, it is possible that a varying speed can be provided in section T2.

From the above, it is clear that, with respect to the known solutions, the assembly 1 allows the retracted rest position of the shear cutting members 6 to be set and/or regulated in the design phase, in a simple manner, by varying the stroke-end angular positions of the rotor 25.

In this regard, the unit 21 could be configured so as to change the stroke-end angular positions of the rotor 25 not only between the different types of thread 3, but also within the production itself between one cutting cycle and the next, so as to execute what is commonly known as the "double cut". For example, this need may arise when it is necessary to cut at least one glass gob, which must be discarded at the start of the thread 4: in fact, advantageously, the stroke of the members 6 can be set for such glass gob at a smaller width with respect to the cuts of the subsequent glass gobs.

At the same time, the assembly 1 allows the user to set the desired movement profile, in particular by setting parameter B or parameter h of the profile M to obtain the desired cutting speed. In fact, in this way, the user can regulate the speed with which the blades 9 impact against the threads 3, to satisfy production needs (making the cut rapidly to cool the glass of the threads 3 as little as possible, deforming the threads 3 locally as little as possible, avoiding transverse thrusts on the newly-cut gobs 6, etc.).

Clearly, it is also not necessary to intervene manually on the transmission 22 or on other mechanical parts to make adjustments and/or operational compensations, but it is sufficient to program and/or set the unit 21 appropriately, which will make the adjustments and/or the compensations automatically. In particular, the electronic cam memorized in the unit 21 allows harmonized cutting speeds with clockwise and anti-clockwise rotations of the rotor 25. In fact, without the compensation of the CAM curve, the speed profile of the shear cutting members 6 would be different depending on the direction of rotation of the rotor 25.

Furthermore, the use of a torque motor for the motor 20 allows transmission devices for operating the crank 23 to be eliminated, so as to reduce weights, complexity and size. At the same time, the torque motor can be controlled with extreme reliability to obtain the desired movement profiles.

The assembly 1 is also relatively simple and compact and can easily be used to replace cutting assemblies previously installed on machines already on the market to improve such machines and/or as a spare part.

Finally, it is clear from the above that modifications and variations can be made to the cutting assembly 1 and method described with reference to the appended figures, which do not go beyond the protective scope, as defined in the appended claims.

In particular, the reciprocating movement could be transferred to the arms 10a and/or 10b by means of transmissions and/or using methods different to those shown above, and/or the shear cutting members 6 could have different shapes and/or different blades with respect to those illustrated by way of example.

**Claims**

1. A cutting assembly (1) for forming glass gobs (2) from at least one thread of molten glass (3); the assembly comprising:

   - a supporting frame (5);
   - two shear cutting members (6) revolving with respect to said supporting frame (5) about respective hinge axes (8), parallel to each other;
   - a movement device (19) comprising a control unit (21), a rotary motor (20) controlled by said control unit (21), and at least one transmission (22,31) driven by a rotor (25) of said rotary motor (20) and configured so as to rotate said shear cutting members (6) with a reciprocating rotary motion about said hinge axes (8), with equal angles and in opposite rotation directions, between an advanced cutting position and at least one retracted rest position;

   **characterized in that** said control unit (21) is configured so as to rotate said rotor (25) in opposite directions, between each cutting cycle and the following cutting cycle, between two stroke-end angular positions.

2. The assembly according to claim 1, **characterized in that** said stroke-end positions correspond to the same retracted rest position as said shear cutting members 6).

3. The assembly according to claim 1 or 2, **characterized in that** said control unit (21) is configured so as to vary said stroke-end angular positions.

4. The assembly according to claim 3, **characterized**

**in that** said control unit (21) is configured so as to vary said stroke-end angular positions between two consecutive cutting cycles on one same thread of molten glass (3).

5. The assembly according to claim 3 or 4, **characterized in that** said control unit (21) is configured so as to vary said stroke-end angular positions based on different types of threads of molten glass (3) to be cut.

6. The assembly according to any one of the preceding claims, **characterized in that** said control unit (21) comprises an electronic cam (CAM) configured so as to rotate said rotor (25) with different movement profiles in a clockwise direction with respect to an anti-clockwise direction; said different movement profiles determining the same speed profile as said sheer cutting members (6) during the cutting.

7. The assembly according to any one of the preceding claims, **characterized in that** said rotary motor (20) is defined by a torque motor.

8. The assembly according to any one of the preceding claims, **characterized in that** said at least one transmission (22,31) comprises a connecting rod and crank transmission (22) comprising:

   - A crank (23) driven by said rotor (25) revolving about a rotation axis (24) parallel to said hinge axes (8) and
   - A connecting rod (26) coupled to said crank (23) and to one of said shear cutting members (6).

9. An assembly according to claim 8, **characterized in that** said rotor (25) has an axis, which coincides with said rotation axis (24).

10. The assembly according to claim 9, **characterized in that** said rotor (25) is fixed to said crank (23).

11. A cutting method for forming glass gobs (2) from at least one thread of molten glass (3) by means of a cutting assembly (1) according to any one of the preceding claims; **characterized in that** said rotor (25) is rotated in opposite directions, between each cutting cycle and the following cutting cycle, between two stroke-end angular positions, corresponding to at least one retracted rest position of said shear cutting members (6).

12. The method according to claim 11, **characterized in that** said stroke-end angular positions correspond to the same retracted rest position as said shear cutting members (6).

13. The method according to claim 11 or 12, **character-**

**ized in that** said stroke-end angular positions are varied.

14. The method according to claim 13, **characterized in that** the stroke-end angular positions are varied between two successive cutting cycles during the cutting of the same thread of molten glass (3).

15. The method according to claim 13, **characterized in that** the stroke-end angular positions are varied according to different types of threads of molten glass (3) to be cut.

16. The method according to any one of the claims from 11 to 15, **characterized in that** said rotor (25) is rotated with different movement profiles in a clockwise direction with respect to an anti-clockwise direction so as to determine the same speed profile as said shear cutting members (6) during the cutting.

FIG. 1

FIG. 2

EP 3 348 523 A1

FIG. 3

FIG. 4

# FIG. 5

# FIG. 6

Europäisches
Patentamt

European
Patent Office

Office européen
des brevets

## EUROPEAN SEARCH REPORT

Application Number

EP 18 15 0445

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 230 010 A (GUENTHNER FRANZ) 28 October 1980 (1980-10-28) * figures 1-3 * | 1-16 | INV. C03B7/10 |
| X | DE 203 11 112 U1 (HEYE INTERNATIONAL GMBH [DE]) 2 September 2004 (2004-09-02) * figures 1,3 * | 1-16 | |
| X | EP 3 109 205 A1 (NIHON YAMAMURA GLASS CO LTD [JP]) 28 December 2016 (2016-12-28) * figures 2,3,8-1,8-2 * | 1-16 | |

TECHNICAL FIELDS
SEARCHED        (IPC)

C03B

The present search report has been drawn up for all claims

| Place of search | Date of completion of the search | Examiner |
|---|---|---|
| The Hague | 25 April 2018 | Marrec, Patrick |

EPO FORM 1503 03.82 (P04C01)

## ANNEX TO THE EUROPEAN SEARCH REPORT
## ON EUROPEAN PATENT APPLICATION NO.

EP 18 15 0445

This annex lists the patent family members relating to the patent documents cited in  the above-mentioned European search report.
The members are as contained in the European Patent Office EDP file on
The European Patent Office is in no way liable for these particulars which are merely given for the purpose of information.

25-04-2018

| Patent document cited in search report | | Publication date | Patent family member(s) | | Publication date |
|---|---|---|---|---|---|
| US  4230010 | A | 28-10-1980 | DE | 2818234 B1 | 08-11-1979 |
|  |  |  | FR | 2424235 A1 | 23-11-1979 |
|  |  |  | JP | S54142223 A | 06-11-1979 |
|  |  |  | NL | 7902464 A | 30-10-1979 |
|  |  |  | US | 4230010 A | 28-10-1980 |
| DE 20311112 | U1 | 02-09-2004 | DE | 20311112 U1 | 02-09-2004 |
|  |  |  | EP | 1500632 A1 | 26-01-2005 |
| EP 3109205 | A1 | 28-12-2016 | CN | 106132882 A | 16-11-2016 |
|  |  |  | EP | 3109205 A1 | 28-12-2016 |
|  |  |  | JP | 6296853 B2 | 20-03-2018 |
|  |  |  | JP | 2015182947 A | 22-10-2015 |
|  |  |  | US | 2017121207 A1 | 04-05-2017 |
|  |  |  | WO | 2015147065 A1 | 01-10-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102017000002460